# EUROPÄISCHE PATENTSCHRIFT

(11) **EP 1 343 604 B1**
(45) Veröffentlichungstag und Bekanntmachung des Hinweises auf die Patenterteilung: **25.05.2005**
(21) Anmeldenummer: 01978131.9
(22) Anmeldetag: 13.09.2001
(51) Int. Cl.: B23D 45/16, B23D 47/12, B27B 5/30, B27B 5/34

(54) **HANDWERKZEUGMASCHINE MIT ZWEI UNMITTELBAR AXIAL BENACHBART ANGEORDNETEN, GEGENLÄUFIG ROTIERENDEN TRENNSCHEIBEN**
HAND-OPERATED MACHINE TOOL WITH TWO IMMEDIATELY AXIALLY ADJACENT CUTTING DISKS WHICH ROTATE IN OPPOSITE DIRECTIONS
MACHINE-OUTIL POURVUE DE DEUX DISQUES DE TRONCONNAGE PLACES AXIALEMENT A PROXIMITE IMMEDIATE ET TOURNANT EN SENS INVERSE

(30) Priorität: 09.12.2000 DE 10061247
(43) Veröffentlichungstag der Anmeldung: 17.09.2003
(73) Patentinhaber: ROBERT BOSCH GMBH, 70442 Stuttgart (DE)
(72) Erfinder: KRAENZLER, Ernst, 70771 Leinfelden-Echterdingen (DE); HOFMANN, Albrecht, 71144 Steinenbronn (DE); KRONDORDER, Harald, 71638 Ludwigsburg (DE); SCHOMISCH, Thomas, 70771 Leinfelden-Echterdingen (DE)
(86) Internationale Anmeldenummer: PCT/DE2001/003513
(87) Internationale Veröffentlichungsnummer: WO 2002/045894

(56) Entgegenhaltungen:
- WO-A-99/44778
- FR-A- 2 192 483
- US-A- 963 520
- PATENT ABSTRACTS OF JAPAN vol. 1998, no. 05, 30. April 1998 (1998-04-30) -& JP 10 006130 A (RETSUKISU KOGYO KK), 13. Januar 1998 (1998-01-13)

## Beschreibung

### Stand der Technik

Die Erfindung geht aus von einer Handwerkzeugmaschine mit zwei unmittelbar aneinander vorbeidrehenden, gegenläufig rotierenden Trennscheiben, insbesondere Kreissägeblättern, der im Oberbegriff des Anspruchs 1 definierten Gattung (siehe z.B. FR-A-2 192 483).

Eine bekannte, als Handsägemaschine ausgebildete Handwerkzeugmaschine dieser Art (US 963 520 oder WO 89/12 522) ist so aufgebaut, daß die innere Antriebsspindel in Richtung der die Kreissägeblätter tragenden Vorstehenden der Antriebsspindel vom Getriebeinnenraum herkommend in die hohle äußere Antriebswelle eingeschoben ist. Dies bedingt, daß die innere Antriebsspindel relativ dünn ausgeführt werden muß und damit das aus dem Gehäuse herausragende Vorstehende der inneren Antriebsspindel meist einen nicht ausreichenden Durchmesser aufweist, um Flansche und andere Aufspannmittel für das aufzuspannende Sägeblatt sicher und haltbar zu befestigen.

### Vorteile der Erfindung

Die erfindungsgemäße Handwerkzeugmaschine wird durch die Merkmale des Anspruchs 1 definiert und hat den Vorteil, daß durch die Gestaltung der inneren Antriebsspindel als von außerhalb des Getriebegehäuses in die äußere Antriebsspindel einschiebbar, das die Trennscheibe aufnehmende Vorstehende auch der inneren Antriebsspindel in nahezu beliebiger Form und mit beliebigem Durchmesser ausgeführt werden kann, da dieses Vorstehende bei der Montage nirgends hindurchgeführt werden muß. Die axiale Festlegung der inneren Antriebsspindel bezüglich der äußeren hat dabei den Vorteil, daß eine den Trennscheibenabstand bestimmende Toleranz in den Bauteilen sehr klein gehalten werden kann.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß alternativen Ausführungsformen der Erfindung ist dabei die axiale Festlegung der inneren Antriebsspindel direkt an der äußeren Antriebsspindel, vorzugsweise durch ein an beiden Antriebsspindeln sich axial abstützendes Radiallager für die innere Antriebsspindel, oder am Gehäuse, vorzugsweise beiderseits eines im Gehäuse axial unverschieblich aufgenommenen Radiallagers für die innere Antriebsspindel, vorgenommen. In beiden Fällen ist die im Gehäuse drehbar gelagerte äußere Antriebsspindel im Gehäuse gegen Axialverschiebung gesichert.

Gemäß einer vorteilhaften Ausführungsform der Erfindung sitzt auf jeder der inneren und äußeren Antriebsspindel ein einen Zahnkranz tragendes Antriebsrad, dessen Zahnkranz mit den Zähnen eines von der Abtriebswelle eines Elektromotors angetriebenen Abtriebsrad mit rechtwinklig zu den koaxialen Achsen der Antriebsrädern ausgerichteter Radachse kämmt. Zur Erzielung einer sehr flachen Bauweise der Maschine im Winkelgetriebebereich sind die Antriebsräder als Tellerräder und ist das Abtriebsrad als ein zwischen den Tellerrädern hineinragendes Zahnritzel ausgebildet.

Gemäß einer vorteilhaften Ausführungsform der Erfindung ist die Drehlagerung der äußeren Antriebsspindel im Gehäuse und die Drehlagerung der inneren Antriebsspindel in der äußeren Antriebsspindel jeweils mittels zweier axial beabstandeter Radiallager vorgenommen, wobei in einer ersten Ausführungsalternative der Erfindung die Radiallager der äußeren Antriebsritzel in je einem am Gehäuse befestigbaren, eine Gehäuseöffnung überdeckenden Lagerdeckel aufgenommen ist. Vorzugsweise sind die Radiallager in den Lagerdeckeln als Kugellager und die Radiallager zwischen innerer und äußerer Antriebsspindel als Nadellager ausgebildet.

Gemäß einer bevorzugten Ausführungsform der Erfindung sind Mittel zum Einstellen des Zahnspiels zwischen den Antriebsrädern und dem Abtriebsrad vorgesehen, die bei der vorstehend beschriebenen ersten Ausführungsalternative Unterlegringe aufweisen, die zwischen dem Gehäuse einerseits und den beiden Lagerdeckeln andererseits angeordnet sind und deren axiale Ringstärke entsprechend dem gewünschten Zahnspiel gewählt ist.

Gemäß einer bevorzugten zweiten Ausführungsalternative der Erfindung ist das eine der beiden Radiallager für die äußere Antriebsspindel in einem am Gehäuse befestigbaren Lagerdeckel und das andere Radiallager in einem rechtwinklig zu den Spindelachsen verlaufenden Gehäusesteg aufgenommen, der sich von einer Gehäusewand aus ins Gehäuseinnere erstreckt. Das eine der zwischen innerer und äußerer Antriebsspindel angeordneten Radiallager ist zwischen den Vorstehenden angeordnet und vorzugsweise als Kugellager ausgebildet und das andere Radiallager an dem davon abgekehrten Ende der äußeren Antriebsspindel angeordnet und vorzugsweise als Nadellager ausgebildet. Die Mittel zur Einstellung des Zahnspiels weisen wiederum Unterlegringe auf, von denen jedoch mindestens einer zwischen Gehäuse und Lagerdeckel und mindestens einer zwischen einer auf der inneren Antriebsspindel ausgebildeten Ringschulter und dem auf der inneren Antriebsspindel drehfest sitzenden Antriebsrad angeordnet ist, wobei wiederum die axiale Ringstärke der Unterlegringe entsprechend dem gewünschten Zahnspiel gewählt ist.

Diese Ausführungsalternative hat den Vorteil, daß nur eine kleine Toleranzkette vorhanden ist (im wesentlichen nur durch das sich zwischen den Antriebsspindeln abstützende Radiallager bestimmt), die den axialen Abstand der Trennscheiben beeinflußt, so daß keine zusätzlichen Maßnahmen erforderlich sind, um Toleranzen von 0,1 - 0,2 mm zwischen den an den Vorstehenden der Antriebsspindeln ausgebildeten Aufnahmen für die Trennscheiben auszugleichen. Weiterhin wird der axiale Abstand der beiden gegenläufigen Trennscheiben durch die Einstellung des Zahnspiels im Tellerradgetriebe nicht beeinflußt. Das Zahnspiel des mit der äußeren Antriebsspindel drehfest verbundenen Antriebsrads kann bei der Montage zu einem Zeitpunkt eingestellt werden, zu dem die hohle äußere Antriebswelle, die dieses Antriebsrad trägt, bereits mit zwei Lagern festgelegt ist und so ein Kippen der äußeren Antriebswelle, das zu Fehlmessungen des Zahnspiels führt, sicher ausgeschlossen ist.

### Zeichnung

Die Erfindung ist anhand von in der Zeichnung dargestellten Ausführungsbeispielen in der nachfolgenden Beschreibung näher erläutert. Es zeigen in schematischer Darstellung:
- Fig. 1: ausschnittweise einen Längsschnitt einer Handwerkzeugmaschine mit zwei gegenläufig rotierenden Trennscheiben,
- Fig. 2: eine gleiche Darstellung wie in Fig. 1 gemäß einem weiteren Ausführungsbeispiel.

### Beschreibung der Ausführungsbeispiele

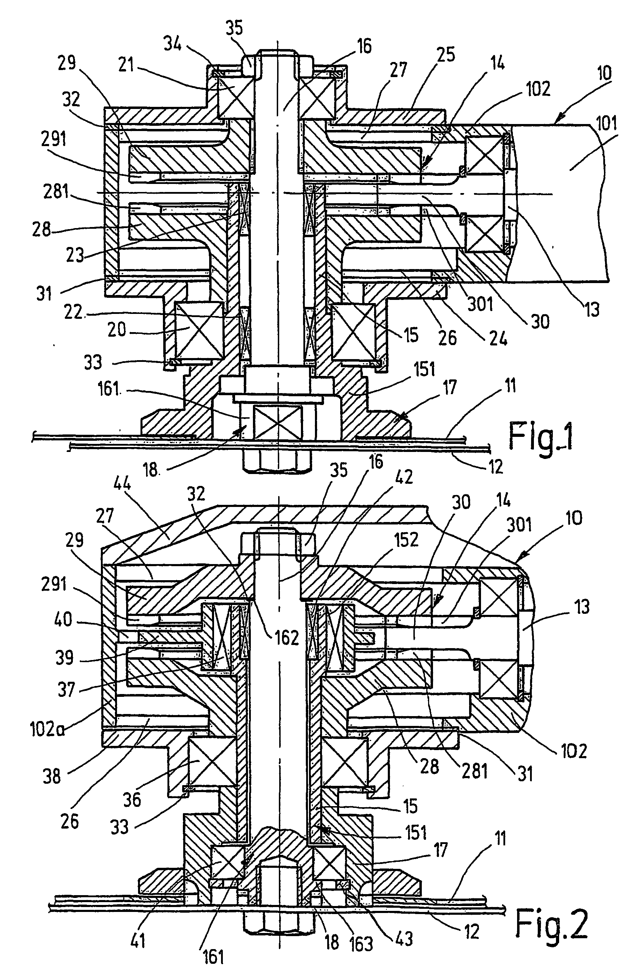

Die in Fig. 1 im Längsschnitt ausschnittweise dargestellte Handwerkzeugmaschine mit zwei gegenläufig rotierenden Trennscheiben 11, 12, die in geringem, ein Aneinandervorbeidrehen ermöglichende axialen Spaltabstand voneinander angeordnet und bevorzugt als Kreissägeblätter ausgebildet sind, weist ein Maschinengehäuse 10 auf, das in ein Motorgehäuse 101 und ein daran angeflanschtes Getriebegehäuse 102 unterteilt ist. Im Motorgehäuse 101 ist ein die Trennscheiben 11, 12 antreibender Elektromotor aufgenommen, von dem in Fig. 1 lediglich dessen Abtriebswelle 13 zu sehen ist. Im Getriebegehäuse 102 ist ein Winkelgetriebe 14 angeordnet, das die Rotationsbewegung der Abtriebswelle 13 auf die Trennscheiben 11, 12, deren Scheibenachsen rechtwinklig zur Achse der Abtriebswelle 13 ausgerichtet sind, überträgt, und zwar derart, daß die beiden Trennscheiben 11, 12 gegenläufig rotieren.

Jede Trennscheibe 11, 12 ist auf einer Antriebsspindel 15, 16 aufgespannt, wobei an den aus dem Getriebegehäuse 102 herausragenden Vorstehenden 151, 161 der beiden Antriebsspindeln 15, 16 Trennscheibenaufnahmen 17, 18 so ausgebildet sind, daß die parallel zueinander ausgerichteten, koaxialen Trennscheiben 11, 12 einen nur sehr geringen axialen Abstand voneinander aufweisen. Die Aufspannmittel sind hier symbolisch durch eine in das Vorstehende der Antriebsspindel 16 eingeschraubte Mutter symbolisiert, wobei die Drehmomentübertragung von den Trennscheibenaufnahmen 17, 18 auf die Trennscheiben 11, 12 durch Formschluß erfolgt. Die Antriebsspindeln 15, 16 sind konzentrisch zueinander angeordnet, wobei die äußere, als Hohlwelle ausgebildete Antriebsspindel 15 die innere Antriebsspindel 16 über eine größere Länge der Antriebsspindel 16 umschließt. Die äußere Antriebsspindel 15 ist mittels zweier voneinander axial beabstandeter Radiallager 20, 21, die hier als Kugellager ausgebildet sind, im Getriebegehäuse 102 drehbar gelagert, und die innere Antriebsspindel 16 ist über zwei axial beabstandete Radiallager 22, 23 , die hier als Nadellager ausgebildet sind, in der äußeren Antriebsspindel 15 abgestützt. Die Radiallager 20, 21 für die äußere Antriebsspindel 15 sind jeweils in einem Lagerdeckel 24, 25 aufgenommen, der am Getriebegehäuse 102 mittels Schrauben befestigt ist und dabei eine von zwei gegenüberliegenden Montageöffnungen 26, 27 im Getriebegehäuse 102 verschließt.

Das ein Abtriebsrad und zwei damit kämmende Antriebsräder umfassende Winkelgetriebe 14 weist als Antriebsräder zwei Tellerräder 28, 29 auf, von denen das in Fig. 1 obere Tellerrad 29 drehfest auf der inneren Antriebsspindel 16 und das in Fig. 1 untere Tellerrad 28 drehfest auf der äußeren Antriebsspindel 15 sitzt. Die drehfeste Verbindung kann durch Kraft- oder Formschluß hergestellt werden, z.B. durch einen Preßsitz der Tellerräder 28, 29 auf den Antriebsspindeln 15, 16 oder eine Profilverzahnung zwischen dem Tellerrad 28 und der Antriebsspindel 15 bzw. dem Tellerrad 29 und der Antriebsspindel 16. Zwischen den Zahnkränzen 281, 291 der Tellerräder 28, 29 liegt ein mit der Abtriebswelle 13 des Elektromotors drehfest verbundenes, das Abtriebsrad des Winkelgetriebes 14 bildendes Zahnritzel 30 ein, dessen Zähne 301 mit den Zahnkränzen 281, 291 der Tellerräder 28, 29 kämmen. Zur Einstellung des Zahnspiels zwischen dem Zahnritzel 30 einerseits und den beiden Tellerrädern 28, 29 andererseits sind zwischen dem Getriebegehäuse 102 und dem Lagerdeckel 24 ein Unterlegring 31 und zwischen dem Getriebegehäuse 102 und dem Lagerdeckel 25 ein Unterlegring 32 angeordnet. Die axiale Ringstärke der Unterlegringe 31, 32 wird entsprechend dem gewünschten Zahnspiel zwischen dem Zahnritzel 30 und den beiden Tellerrädern 28, 29 gewählt. Je nach Konstruktion kann aber bereits ohne die Unterlegringe 31, 32 oder erst durch mehrere Unterlegringe 31, 32 das passende Zahnspiel erreicht werden.

Die beiden Antriebsspindeln 15, 16 stehen über dem unteren Lagerdeckel 24 vor und tragen an ihren Vorstehenden jeweils die Trennscheibenaufnahme 17 bzw. 18. Die innere Antriebsspindel 15 ist so ausgebildet, daß sie von dem Vorstehende der äußeren Antriebsspindel 15 her in die äußere Antriebsspindel 15 einschiebbar ist. Dadurch kann nicht nur das Vorstehende der äußeren Antriebsspindel 15, sondern auch das Vorstehende der inneren Antriebsspindel 16 so dimensioniert werden, daß ein ausreichend großer Durchmesser vorhanden ist, um die Trennscheibenaufnahme 18 sicher und haltbar am Vorstehende 161 zu befestigen oder die mit dem Vorstehende 161 einstückige Trennscheibenaufnahme 18 ausreichend großflächig auszubilden. Dadurch, daß die innere Antriebsspindel 16 durch das Radiallager 21 am Lagerdeckel 25 und die äußere Antriebsspindel 15 durch das Radiallager 20 am Lagerdeckel 24 jeweils axial unverschieblich festgelegt ist, liegt die innere Antriebsspindel 16 relativ zur äußeren axial unverschieblich fest, so daß die von den Trennscheibenaufnahmen 17, 18 aufgenommenen Trennscheiben 11, 12 einen konstanten Abstand voneinander haben, dessen Toleranz nur von den axialen Toleranzen der beiden Radiallager 21, 20 bestimmt ist.

Die Montage des Winkelgetriebes 14 mit Antriebsspindel 15, 16 wird wie folgt durchgeführt:

Die Radiallager 20, 21 werden in die Lagerdeckel 24, 25 fest eingebunden, z.B. eingepreßt, mit Kunststoff umspritzt oder eingeschoben und mit Sicherungsringen 33, wie dies in Fig. 1 dargestellt ist, gehalten. In das Radiallager 20 wird die äußere Antriebsspindel 15 geschoben und axial fixiert. Die Fixierung erfolgt durch Preßsitz des Tellerrads 28, welches anschließend auf die äußere Antriebsspindel 15 aufgepreßt wird, oder durch einen Sicherungsring. Die vormontierte, äußere Antriebsspindel 15 wird mittels des Lagerdeckels 24 am Getriebegehäuse 102 montiert und mittels Schrauben festgesetzt. Falls nötig wird durch Unterlegen eines oder mehrere Unterlegringe 31 das Zahnspiel zwischen dem unteren Tellerrad 28 und dem Zahnritzel 30 eingestellt. Vor Einschieben der äußeren Antriebsspindel 15 in das Radiallager 20 werden noch die beiden als Nadellager ausgebildeten Radiallager 22, 23 durch Preßsitz in die äußere Antriebsspindel 15 eingebaut.

Nun wird von der bereits montierten Lagerdeckelseite aus, d.h. vom Vorstehende 151 der äußeren Antriebsspindel 15 her, die innere Antriebsspindel 16 durch die im Innern der äußeren Antriebsspindel 15 angeordneten Radiallager 22, 23 eingeschoben. Von oben wird das Tellerrad 29 auf die innere Antriebsspindel 16 aufgeschoben und mit diesem z.B. durch eine Profilverzahnung drehfest verbunden. Dann wird der obere Lagerdeckel 25 mit dem montierten Radiallager 21 auf die innere Antriebsspindel 16 geschoben. Bei diesem Schritt können zur Zahnspielanpassung zwischen dem oberen Tellerrad 29 und dem Zahnritzel 30 ein oder mehrere Unterlegringe 32 zwischen Getriebegehäuse 102 und oberem Lagerdeckel 25 eingelegt werden. Abschließend wird der Lagerdeckel 25 am Getriebegehäuse 102 mittels Schrauben festgeschraubt und die axiale Sicherung der inneren Antriebsspindel 16 mittels einer Mutter 35 vorgenommen, die sich gegen das Radiallager 21 abstützt.

Das in Fig. 2 ebenfalls im Längsschnitt ausschnittweise dargestellte, modifizierte Ausführungsbeispiel für eine Handwerkzeugmaschine mit zwei gegenläufig rotierenden Trennscheiben 11, 12 stimmt bezüglich des Maschinengehäuses 10, des im Getriebegehäuse 102 aufgenommenen Winkelgetriebes 14 und den beiden konzentrischen Antriebsspindeln 15, 16 überein, die an ihrem Vorstehende 151, 161 jeweils eine Trennscheibenaufnahme 17 bzw. 18 für die Trennscheiben 11, 12 tragen. Anders als beim Ausführungsbeispiel gemäß Fig. 1 ist hier die Aufnahme 17 für die Trennscheibe 11 nicht einstückig mit der äußeren Antriebswelle 15 ausgebildet, sondern als separates Teil auf das Vorstehende 151 aufgepreßt. Die innere Antriebsspindel 16 ist wiederum so ausgebildet, daß sie in Fig. 2 von unten her, also von dem Vorstehende 151 der äußeren Antriebsspindel 15 aus, in die hohle Antriebsspindel 15 eingeschoben werden kann.

Die äußere Antriebsspindel 15 ist wiederum über zwei in Achsrichtung beabstandete Radiallager 36, 37 drehbar im Getriebegehäuse 102 festgelegt, wobei das eine Radiallager 36, wie bei dem Ausführungsbeispiel in Fig. 1, in einem Lagerdeckel 38 aufgenommen ist, der die untere Montageöffnung 26 im Getriebegehäuse 102 verschließt. Der Lagerdeckel 38 ist in gleicher Weise mittels hier nicht dargestellter Schrauben am Getriebegehäuse 102 befestigt. Das andere Radiallager 37 ist in einem Gehäusesteg 39 aufgenommen, vorzugsweise durch Preßsitz, der sich rechtwinklig zu den Achsen der Antriebsspindeln 15, 16 von der Gehäusewand 102a aus ins Gehäuseinnere erstreckt. Dieser Gehäusesteg 39 liegt etwa mittig zwischen den beiden Montageöffnungen 26, 27 im Getriebegehäuse 102. Im Gehäusesteg 39 sind Durchgangsbohrungen 40 vorgesehen, die einen Fluß des Getriebefettes zwischen den beiden durch den Gehäusesteg 39 gebildeten Gehäusekammern im Getriebegehäuse 102 ermöglichen. Zur Einstellung des Zahnspiels zwischen dem Zahnritzel 30 und dem in Fig. 2 unteren Tellerrad 28 ist wiederum ein Unterlegring 31 zwischen dem Lagerdeckel 38 und dem Getriebegehäuse 102 angeordnet, dessen axiale Ringstärke nach dem gewünschten Zahnspiel bemessen ist. Zur Schaffung einer Einstellmöglichkeit für das Zahnspiel zwischen dem Zahnritzel 30 und den in Fig. 2 oberen Tellerrad 29 ist auf der inneren Antriebsspindel 16 eine Ringschulter 162 zur axialen Anlage des oberen Tellerrads 29 ausgebildet. Zwischen dieser Ringschulter 162 und dem Tellerrad 29 ist ein Unterlegring 32 angeordnet, dessen axiale Ringstärke wiederum das Zahnspiel zwischen dem oberen Tellerrad 29 und dem Zahnritzel 30 bemißt. Wie zu Fig. 1 bereits ausgeführt worden ist, kann das passende Zahnspiel auch hier bereits ohne die Unterlegringe 31, 32 oder erst durch mehrere Unterlegringe 31, 32 erreicht werden.

In gleicher Weise wie in Fig. 1 ist die innere Antriebsspindel 16 in der äußeren Antriebsspindel 15 durch zwei in Achsrichtung voneinander beabstandete Radiallager 41, 42 abgestützt. Dabei ist das in Fig. 2 untere Radiallager 41 als Kugellager ausgebildet und im Bereich der Vorstehenden 151, 161 der Antriebsspindeln 15, 16 angeordnet. Im Ausführungsbeispiel der Fig. 2 ist das Radiallager 41 zwischen den beiden Trennscheibenaufnahmen 17, 18 angeordnet und bewirkt mittels einer am Vorstehende 161 der inneren Antriebsspindel 16 ausgebildeten, ringförmigen Anlageschulter 163 für das Radiallager 41 eine direkte axiale Festlegung der beiden Antriebsspindeln 15, 16 zueinander. Damit ist der axiale Abstand der beiden Trennscheiben 11, 12 festgelegt, dessen Toleranz ausschließlich von der axialen Toleranz des Radiallagers 41 bestimmt ist. Das andere Radiallager 42, das wiederum als Nadellager ausgebildet ist, ist an dem vom Vorstehende 151 der Antriebsspindel 15 abgekehrten Ende 152 angeordnet und kraftschlüssig, z.B. durch Einpressen, festgelegt.

Die Montage des in Fig. 2 dargestellten Winkelgetriebes 14 mit Antriebsspindeln 15, 16 wird wie folgt durchgeführt:

Das Radiallager 36 wird mit dem Lagerdeckel 38 verbunden, z.B. durch den Sicherungsring 33. Bei einem Kunststofflagerdeckel kann das Radiallager 36 aber auch umspritzt werden, oder bei der Ausführung des Lagerdeckels 38 aus Aluminium kann das Radiallager 36 eingepreßt werden. Die hohle äußere Antriebsspindel 15 wird an ihrem Ende 152 mit dem als Nadellager ausgebildeten Radiallager 42 versehen, das beispielsweise eingepreßt wird, wobei es sich an einer eingestochenen Ringschulter im Innern der äußeren Antriebsspindel 15 axial abstützt. Von unten wird auf die äußere Antriebsspindel 15 das untere Tellerrad 28, das mit dem Lagerdeckel 38 vormontierte Radiallager 41 und die Trennscheibenaufnahme 17 aufgepreßt. Mit der inneren Antriebswelle 16 wird das als Kugellager ausgebildete Radiallager 41 verbunden, und mit dem Einführen der inneren Antriebswelle 16 in die äußere Antriebswelle 15 wird das Radiallager 41 in die Trennscheibenaufnahme 17 am Vorstehende 151 der äußeren Antriebswelle 15 eingepreßt und mit einem Sicherungsring 43 gehalten. Damit entsteht eine vormontierte Baueinheit, die nunmehr in das Getriebegehäuse 102 eingesetzt wird, welches zuvor im Gehäusesteg 39 mit dem als Nadellager ausgebildeten Radiallager 37, z.B. durch Einpressen, versehen wird. Die vormontierte Baueinheit wird mit der äußeren hohlen Antriebsspindel 15 durch das Radiallager 37 im Gehäusesteg 39 hindurchgeführt und mit dem Lagerdeckel 38 mittels hier nicht dargestellter Schrauben am Getriebegehäuse 102 befestigt, so daß die untere Montageöffnung 26 verschlossen ist. Nun wird das Zahnspiel des unteren Tellerrads 28 gemessen und durch Einlegen von Unterlegringen 31 mit entsprechender Ringstärke zwischen Lagerdeckel 38 und Getriebegehäuse 102 eingestellt. Bei Messung und Einstellung des Zahnspiels ist die äußere Antriebsspindel 15 kippsicher in den beiden Radiallagern 36, 37 gelagert. Die Einstellung des Zahnspiels beeinflußt nicht den axialen Abstand der Trennscheibenaufnahmen 17, 18. Anschließend wird das obere Tellerrad 29 auf die innere Antriebsspindel 16 aufgesteckt und mit der Mutter 35 gesichert. Die Drehmomentübertragung zwischen der innerer Antriebsspindel 16 und dem oberen Tellerrad 29 wird durch eine hier nicht dargestellte Profilverzahnung gesichert. Nun wird das Zahnspiel des oberen Tellerrads 29 gemessen. Eine Korrektur des Zahnspiels erfolgt durch Lösen der Mutter 35 und Einlegen eines Unterlegrings 32 mit entsprechender Ringstärke zwischen der Ringschulter 162 auf der inneren Antriebsspindel 16 und dem oberen Tellerrad 29. Auch diese Zahnspieleinstellung beeinflußt nicht den axialen Abstand der Trennscheibenaufnahmen 17, 18 für die Trennscheiben 11, 12. Zur Abdeckung der im Betrieb mitdrehenden Mutter 35 ist ein Deckel 44 vorgesehen, der die obere Montageöffnung 27 überdeckt.

Die Erfindung ist nicht auf das beschriebene Ausführungsbeispiel beschränkt. So können die hier als Sägeblätter ausgeführten Trennscheiben 11, 12 auch als Schleifscheiben ausgebildet sein, um die Handwerkzeugmaschine als Trennschleifer einzusetzen.

Verzichtet man auf die besonders flache Bauweise des Getriebegehäuses 102, so können anstelle der beiden Tellerräder 28, 29 und des mit diesen in Eingriff stehenden Zahnritzels 30 alle drei Getrieberäder durch Kegelräder ersetzt werden.

## Patentansprüche

1. Handwerkzeugmaschine mit zwei unmittelbar axial benachbart angeordneten, gegenläufig rotierenden Trennscheiben (11, 12), insbesondere Kreissägeblättern, mit einem Gehäuse (102) und zwei gegenläufig antreibbaren, endseitig aus dem Gehäuse (102) vorstehenden, zueinander konzentrisch drehgelagerten Antriebsspindeln (15, 16), deren Vorstehenden (151, 161) zur drehfesten Aufnahme jeweils einer der Trennscheiben (11, 12) ausgebildet ist, **dadurch gekennzeichnet, daß** die innere Antriebsspindel (16) von dem Vorstehende (151) der äußeren Antriebsspindel (15) her in die äußere Antriebsspindel (15) einschiebbar ausgebildet und relativ zur äußeren Antriebsspindel (15) axial unverschieblich festgelegt ist.

2. Handwerkzeugmaschine nach Anspruch 1, **dadurch gekennzeichnet, daß** auf der inneren und äußeren Antriebsspindel (15, 16) je ein einen Zahnkranz (281 bzw. 291) tragendes Antriebsrad (28 bzw. 29) drehfest sitzt, dessen Zahnkranz (281 bzw. 291) mit den Zähnen (301) eines von der Abtriebswelle (13) eines Antriebsmotors, vorzugsweise eines Elektromotors, angetriebenen Abtriebsrads (30) mit rechtwinklig zu den koaxialen Achsen der Antriebsräder (28, 29) ausgerichteter Radachse kämmt, und vorzugsweise daß die Antriebsräder (28, 29) als Tellerräder (28, 29) und das Abtriebsrad (13) als Zahnritzel (30) ausgebildet sind.

3. Handwerkzeugmaschine nach Anspruch 2, **dadurch gekennzeichnet, daß** Mittel zum Einstellen des Zahnspiels zwischen den Antriebsrädern (28, 29) und dem Abtriebsrad (30) vorgesehen sind.

4. Handwerkzeugmaschine nach Anspruch 2 oder 3, **dadurch gekennzeichnet, daß** die Drehlagerung der äußeren Antriebsspindel (15) im Gehäuse (102) und die Drehlagerung der inneren Antriebsspindel (16) in der äußeren Antriebsspindel (15) jeweils mittels zweier axial voneinander beabstandeter Radiallager (20, 21 bzw. 22, 23; 36, 37 bzw. 41, 42) vorgenommen ist.

5. Handwerkzeugmaschine nach Anspruch 4, **dadurch gekennzeichnet, daß** die Radiallager (20, 21) der äußeren Antriebsspindel (15) in je einem am Gehäuse (102) befestigbaren, eine Gehäuseöffnung (26, 27) verschließenden Lagerdeckel (24, 25) aufgenommen sind.

6. Handwerkzeugmaschine nach Anspruch 5, **dadurch gekennzeichnet, daß** die Mittel zur Zahnspieleinstellung zwischen dem Gehäuse (012) einerseits und den beiden Lagerdeckeln (24, 25) andererseits angeordnete Unterlegringe (31, 32) aufweisen, deren axiale Ringstärke entsprechend dem gewünschten Zahnspiel gewählt ist.

7. Handwerkzeugmaschine nach Anspruch 4, **dadurch gekennzeichnet, daß** das eine Radiallager (36) der äußeren Antriebsspindel (15) in einem am Gehäuse (102) befestigbaren Lagerdeckel (38) aufgenommen ist, der eine den Vorstehenden (151, 161) der Antriebsspindeln (15, 16) zugekehrte Gehäuseöffnung (26) verschließt und das andere Radiallager (37) in einem rechtwinklig zu den Spindelachsen verlaufenden Gehäusesteg (39) aufgenommen ist, der sich von einer Gehäusewand (102a) aus ins Gehäuseinnern erstreckt und vorzugsweise mit Durchgangsbohrungen (40) versehen ist.

8. Handwerkzeugmaschine nach Anspruch 7, **dadurch gekennzeichnet, daß** die Mittel zur Einstellung des Zahnspiels Unterlegringe (31, 32) aufweisen, von denen mindestens einer zwischen Gehäuse (102) und Lagerdeckel (38) und mindestens einer zwischen einer auf der inneren Antriebsspindel (16) ausgebildeten Ringschulter (162) und dem auf der inneren Antriebsspindel (16) sitzenden Antriebsrad (29) angeordnet ist, und daß die axiale Ringstärke der Unterlegringe (31, 32) entsprechend dem gewünschten Zahnspiel gewählt ist.

9. Handwerkzeugmaschine nach Anspruch 7 oder 8, **dadurch gekennzeichnet, daß** die axiale Festlegung der inneren Antriebsspindel (16) gegenüber der äußerer Antriebsspindel (15) mit nur einem Bauteil, vorzugsweise mit einem zwischen den Vorstehenden (151, 161) der Antriebsspindeln (15, 16) oder zwischen an den Vorstehenden (151, 161) ausgebildeten Aufnahmen (17, 18) für die Trennscheiben (11, 12) sich axial abstützenden Radiallager (41), vorgenommen ist.

10. Handwerkzeugmaschine nach einem der Ansprüche 7 - 9, **dadurch gekennzeichnet, daß** eine der vom Lagerdeckel (38) verschlossenen Gehäuseöffnung (26) gegenüberliegende zweite Gehäuseöffnung (27) mittels eines lösbar am Gehäuse (102) befestigten Deckels (44) verschlossen ist.

## Claims

1. Powered hand tool having two cut-off discs (11, 12), in particular circular saw blades, arranged directly adjacent to one another axially and rotating in opposite directions, having a housing (102) and two drive spindles (15, 16) which can be driven in opposite directions, project at the end from the housing (102) and are rotatably mounted concentrically to one another and whose projecting ends (151, 161) are designed for accommodating in each case one of the cut-off discs (11, 12) in a rotationally fixed manner, **characterized in that** the inner drive spindle (16) is designed in such a way that it can be pushed from the projecting end (151) of the outer drive spindle (15) into the outer drive spindle (15) and is secured in an axially fixed position relative to the outer drive spindle (15).

2. Powered hand tool according to Claim 1, **characterized in that** a respective drive gear (28 or 29) carrying a toothed rim (281 or 291) sits in a rotationally fixed manner on the inner and outer drive spindles (15, 16), the toothed rim (281 or 291 resp.) of this drive gear (28 or 29 resp.) meshing with the teeth (301) of an output gear (30) which is driven by the output shaft (13) of a drive motor, preferably an electric motor, and has a gear axis oriented at right angles to the coaxial axes of the drive gears (28, 29), and preferably **in that** the drive gears (28, 29) are designed as crown wheels (28, 29) and the output gear (13) is designed as a pinion (30).

3. Powered hand tool according to Claim 2, **characterized in that** means for setting the tooth clearance between the drive gears (28, 29) and the output gear (30) are provided.

4. Powered hand tool according to Claim 2 or 3, **characterized in that** the rotary mounting of the outer drive spindle (15) in the housing (102) and the rotary mounting of the inner drive spindle (16) in the outer drive spindle (16) are in each case carried out by means of two axially spaced-apart radial bearings (20, 21 and 22, 23 resp.; 36, 37 and 41, 42 resp.).

5. Powered hand tool according to Claim 4, **characterized in that** the radial bearings (20, 21) of the outer drive spindle (15) are accommodated in a respective bearing cap (24, 25) which can be fastened to the housing (102) and closes a housing opening (26, 27).

6. Powered hand tool according to Claim 5, **characterized in that** the means for setting the tooth clearance have spacer rings (31, 32) which are arranged between the housing (102) on the one hand and the two bearing caps (24, 25) on the other hand and whose axial ring thickness is selected in accordance with the desired tooth clearance.

7. Powered hand tool according to Claim 4, **characterized in that** the one radial bearing (36) of the outer drive spindle (15) is accommodated in a bearing cap (38) which can be fastened to the housing (102) and closes a housing opening (26) facing the projecting ends (151, 161) of the drive spindles (15, 16), and the other radial bearing (37) is accommodated in a housing web (39) which runs at right angles to the spindle axes, extends from a housing wall (102a) into the housing interior and is preferably provided with through-holes (40).

8. Powered hand tool according to Claim 7, **characterized in that** the means for setting the tooth clearance have spacer rings (31, 32), of which at least one is arranged between the housing (102) and the bearing cap (38) and at least one is arranged between an annular shoulder (162) formed on the inner drive spindle (16) and the drive gear (29) sitting on the inner drive spindle (16), and **in that** the axial ring thickness of the spacer rings (31, 32) is selected in accordance with the desired tooth clearance.

9. Powered hand tool according to Claim 7 or 8, **characterized in that** the inner drive spindle (16) is fixed axially relative to the outer drive spindle (15) using only one component, preferably using a radial bearing (41) axially supported between the projecting ends (151, 161) of the drive spindles (15, 16) or between receptacles (17, 18), formed on the projecting ends (151, 161), for the cut-off discs (11, 12).

10. Powered hand tool according to one of Claims 7 to 9, **characterized in that** a second housing opening (27) opposite the housing opening (26) closed by the bearing cap (38) is closed by means of a cap (44) releasably fastened to the housing (102).

## Revendications

1. Machine-outil manuelle pourvue de deux disques de tronçonnage disposés axialement à proximité immédiate et tournant en sens inverse (11, 12), en particulier des lames de scie circulaire, avec un boîtier (102) et deux broches d'entraînement (15, 16) logées en rotation concentriquement l'une par rapport à l'autre, saillantes à l'extrémité hors du boîtier (102) et pouvant être entraînées en sens inverse, dont les extrémités saillantes (151, 161) sont conçues pour recevoir chacune un des disques de tronçonnage (11, 12) calé en rotation,
**caractérisée en ce que**
la broche d'entraînement intérieure (16) peut être introduite dans la broche d'entraînement extérieure (15) depuis l'extrémité saillante (151) de la broche d'entraînement extérieure (15) et est fixée de manière immobile axialement par rapport à la broche d'entraînement extérieure (15).

2. Machine-outil manuelle selon la revendication 1,
**caractérisée en ce qu'**
une roue d'entraînement (28 ou 29) portant une couronne dentée (281 ou 291) est calée en rotation sur chaque broche d'entraînement intérieure et extérieure (15, 16), dont la couronne dentée (281 ou 291) s'engrène avec les dents (301) d'une roue de sortie (30) entraînée par l'arbre de sortie (13) d'un moteur d'entraînement, de préférence d'un moteur électrique, avec l'axe de la roue orienté perpendiculairement aux axes coaxiaux des roues d'entraînement (28, 29), et de préférence les roues d'entraînement (28, 29) sont des couronnes de différentiel (28, 29) et la roue de sortie (13) un pignon denté (30).

3. Machine-outil manuelle selon la revendication 2,
**caractérisée en ce que**
des moyens sont prévus pour le réglage du jeu des roues entre les roues d'entraînement (28, 29) et la roue de sortie (30).

4. Machine-outil manuelle selon la revendication 2 ou 3,
**caractérisée en ce que**
le support rotatif de la broche d'entraînement extérieure (15) dans le boîtier (102) et le support rotatif de la broche d'entraînement intérieure (16) dans la broche d'entraînement extérieure (15) est chaque fois réalisé au moyen de deux paliers radiaux (20, 21, ou 22, 23; 36, 37 ou 41, 42) espacés axialement l'un de l'autre.

5. Machine-outil manuelle selon la revendication 4,
**caractérisée en ce que**
les paliers radiaux (20, 21) de la broche d'entraînement extérieure (15) sont logés chacun dans un chapeau de palier (24, 25) fermant une ouverture de boîtier (26, 27) et pouvant être fixé au boîtier (102).

6. Machine-outil manuelle selon la revendication 5,
**caractérisée en ce que**
les moyens de réglage du jeu des roues présentent des rondelles de support (31, 32) disposées entre le boîtier (102) d'une part et les deux chapeaux de palier (24, 25) d'autre part, et dont l'épaisseur axiale est choisie en fonction du jeu désiré entre les dents.

7. Machine-outil manuelle selon la revendication 4,
**caractérisée en ce que**
le premier palier radial (36) de la broche d'entraînement extérieure (15) est logé dans un chapeau de palier (38) pouvant être fixé au boîtier (102), qui ferme une ouverture de palier (26) tournée vers les extrémités saillantes (151, 161) des broches d'entraînement (15, 16), et l'autre palier radial (37) est logé dans une nervure de boîtier (39) orientée perpendiculairement aux axes des broches, qui s'étend à partir d'une paroi du boîtier (102a) en direction de l'intérieur du boîtier et qui est de préférence pourvue de trous de passage (40).

8. Machine-outil manuelle selon la revendication 7,
**caractérisée en ce que**
les moyens de réglage du jeu des dents présentent des rondelles de support (31, 32), dont au moins une est disposée entre le boîtier (102) et le chapeau de palier (38) et au moins une entre un épaulement de rondelle (162) formé sur la broche d'entraînement intérieure (16) et la roue d'entraînement (29) calée sur la broche d'entraînement intérieure (16), et **en ce que** l'épaisseur axiale des rondelles de support (31, 32) est choisie en fonction du jeu désiré entre les dents.

9. Machine-outil manuelle selon la revendication 7 ou 8,
**caractérisée en ce que**
la fixation axiale de la broche d'entraînement intérieure (16) par rapport à la broche d'entraînement extérieure (15) est assurée avec une seule pièce, de préférence avec un palier radial (41) prenant appui axialement entre les extrémités saillantes (151, 161) des broches d'entraînement (15, 16) ou entre des logements (17, 18) formés sur les extrémités saillantes (151, 161) pour les disques de tronçonnage (11, 12).

10. Machine-outil manuelle selon l'une quelconque des revendications 7 à 9,
**caractérisée en ce qu'**
à l'opposé de l'ouverture de boîtier (26) fermée par le chapeau de palier (38) une deuxième ouverture de boîtier (27) est fermée au moyen d'un couvercle (44) fixé de façon détachable au boîtier (102).
